# EUROPEAN PATENT APPLICATION

(11) **EP 4 648 210 A1**
(43) Date of publication of application: **12.11.2025**
(21) Application number: 25169142.4
(22) Date of filing: 08.04.2025
(51) Int. Cl.: H01M 50/531, H01M 50/536, H01M 10/613, H01M 10/643, H01M 10/654, H01M 10/6554, H01M 50/169, H01M 50/152

(54) **BATTERY AND ELECTRICAL DEVICE**

(30) Priority: 10.05.2024 CN 202421010834 U
(71) Applicant: AESC Japan Ltd., Yokohama-Shi, Kanagawa 220-0012 (JP)
(72) Inventor: CHEN, Xiu, Wuxi City, Jiangsu Province, 214443 (CN)
(74) Representative: Becker, Eberhard

(57) **Abstract**

Disclosed are a battery (100) and an electrical device. The battery (100) includes a case assembly (1) including a shell (11) provided with an opening disposed at an end thereof in an axial direction and a cover plate (12) sealing the opening; and an electrode assembly (2) disposed within an inner cavity of the shell (11). A tab (21) disposed at an end of the electrode assembly (2) facing the cover plate (12) is electrically connected to the cover plate (12). A first thermal conductive structure (4) and a second thermal conductive structure (5) included between the tab (21) and the cover plate (12) are arranged at intervals along the cover plate (12) in a radial direction, and transfer heat generated on the electrode assembly (2) to the cover plate (12).

## Description

### BACKGROUND

### Technical Field

The disclosure relates to the field of battery technology, and in particular to a battery and an electrical device.

### Description of Related Art

With the development of society and economy, batteries are used as energy storage and supply devices in many electrical devices, such as new energy vehicles, communication base stations, and energy storage containers.

Current battery designs often pursue high energy density and high output power, which generate significant heat during high current output. Due to the limited thermal dissipation channels between the electrode assembly and external cooling components, heat may concentrate inside the battery, affecting the safety performance of the battery.

### SUMMARY

Given the aforementioned problems, the disclosure provides a battery and an electrical device. At least two thermal conductive structures are disposed between a cover plate and an electrode assembly, increasing a thermal conductive path, which may improve thermal dissipation efficiency of the battery.

The disclosure provides a battery. The battery includes a case assembly including a shell and a cover plate, where an opening is disposed at an end of the shell in an axial direction, and the cover plate seals the opening; and an electrode assembly, disposed within an inner cavity of the shell, where a tab is disposed at an end of the electrode assembly facing the cover plate. The tab is electrically connected to the cover plate. A first thermal conductive structure and a second thermal conductive structure are included between the tab and the cover plate. The first thermal conductive structure and the second thermal conductive structure are arranged at intervals along the cover plate in a radial direction. The first thermal conductive structure and the second thermal conductive structure transfer heat generated on the tab to the cover plate.

In some embodiments, an edge of the cover plate includes a boss protruding towards a side of the electrode assembly, the boss having an outer diameter matching the inner diameter of the shell.

In some embodiments, the battery further includes a collector plate, the collector plate is welded to the cover plate and the tab respectively, and a welded joint between the collector plate and the cover plate constitutes the first thermal conductive structure.

In some embodiments, the second thermal conductive structure is in thermal contact with the collector plate and the cover plate respectively.

In some embodiments, the second thermal conductive structure is fixedly connected to at least one of the collector plate and the cover plate.

In some embodiments, the second thermal conductive structure is integrally formed with the collector plate.

In some embodiments, the second thermal conductive structure is selected form at least one of a thermal conductive adhesive, a thermal conductive pad, and a metal element.

In some embodiments, a thermal conductivity (t) of the second thermal conductive structure has a value range of: t > 20W/mK.

In some embodiments, a central region of the collector plate is welded to the cover plate to form the first thermal conductive structure.

In some embodiments, the second thermal conductive structure is located on a radial inner side of the boss and spaced apart from the first thermal conductive structure, and a radial distance between the second thermal conductive structure and the first thermal conductive structure is greater than 5mm.

In some embodiments, the second thermal conductive structure is arranged in a stacked manner between the boss and the electrode assembly.

In some embodiments, at least a part of the second thermal conductive structure in the radial direction is arranged in a stacked manner with the collector plate; or, the collector plate is located on a radial inner side of the second thermal conductive structure, and an inner wall of the second thermal conductive structure abuts against a peripheral wall of the collector plate.

In some embodiments, the collector plate includes a plate body and a folding portion, an outer diameter of the plate body is matching the inner diameter of the shell, an end of the folding portion is connected to an edge of the plate body, at least a part of a structure of the folding portion extends in a direction parallel to the plate body, and the folding portion composes the second thermal conductive structure.

In some embodiments, an installation gap is defined between the folding portion and the plate body, the battery further includes an elastic element, the elastic element is disposed in the installation gap, and two ends of the elastic element abut against the folding portion and the plate body respectively.

In some embodiments, the edge of the collector plate is welded to the boss to form the first thermal conductive structure.

In some embodiments, a side of the boss facing away from the electrode assembly includes a first groove, and a bottom wall of the first groove is welded to the collector plate to form the first thermal conductive structure.

In some embodiments, the second thermal conductive structure is disposed at a radial inner side of the boss, and an interval between the second thermal conductive structure and the boss in the radial direction is greater than 5mm.

In some embodiments, the second thermal conductive structure is disposed in the central region of the collector plate, and the second thermal conductive structure is welded to the cover plate.

In some implementations, the collector plate includes a first thickening portion and a second thickening portion, the first thickening portion is welded to the cover plate to compose the first thermal conductive structure, and the second thickening portion is welded and connected to the cover plate to form the second thermal conductive structure.

In some embodiments, a material of at least one of the first thickening portion and the second thickening portion is the same as the material of the cover plate.

In some embodiments, a welding area corresponding to the second thermal conductive structure is S1, a welding area corresponding to the first thermal conductive structure is S2, and S1 and S2 satisfy: S1/S2≤1/8.8.

In some embodiments, the first thermal conductive structure is disposed in the central region of the collector plate, the second thermal conductive structure is disposed at the edge of the collector plate, the second thermal conductive structure may extend towards a side of the cover plate along the cover plate in the axial direction, and the second thermal conductive structure is embedded between the boss and the shell.

In some embodiments, the tab and the cover plate are electrically connected through the first thermal conductive structure.

In some embodiments, the cover plate and the tab are welded to form the first thermal conductive structure.

In some embodiments, the battery is a cylindrical battery.

In some embodiments, the shell includes a top wall opposite to the cover plate and a sidewall surrounding the top wall, the top wall and the sidewall are integrally formed, and the sidewall defines the opening, the battery further includes a terminal, the terminal is inserted through the top wall, an end of the electrode assembly facing the terminal includes a positive tab, the terminal is electrically connected to the positive tab, the tab at the end of the electrode assembly facing the cover plate is a negative tab, and the shell is electrically connected to the negative tab.

The disclosure further provides an electrical device including the battery according to the first aspect of the disclosure.

According to the battery of the disclosure, the first thermal conductive structure and the second thermal conductive structure are disposed between the cover plate and the electrode assembly, so that the heat generated by the electrode assembly may be transferred to the cover plate through the first thermal conductive structure and the second thermal conductive structure respectively. The thermal conductive path between the electrode assembly and the cover plate is increased. The temperature field distribution on the cover plate side is optimized. In this way, the thermal dissipation efficiency of the battery is improved, so that the battery thermal dissipation method is more suitable for system-level thermal management requirements, thereby expanding the application range of the battery. Moreover, the overall implementation method is relatively simple and easy to implement.

### BRIEF DESCRIPTION OF THE DRAWINGS

In order to more clearly illustrate the technical solutions in the embodiments of the disclosure or in the prior art, a brief introduction is given below to the drawings that need to be used in the description of the embodiments or the prior art. Obviously, the drawings described below are some embodiments of the disclosure. For those skilled in the art, other drawings may be obtained based on these drawings without creative effort.
FIG. 1 is a schematic view of a structure of a battery according to some embodiments of the disclosure.
FIG. 2 is a cross-sectional view along an A-A section in FIG. 1, where a second thermal conductive structure in FIG. 2 is integrally formed with a collector plate.
FIG. 3 is a schematic view of a structure of a battery according to some embodiments of the disclosure.
FIG. 4 is a cross-sectional view along a B-B section in FIG. 3.
FIG. 5 is a schematic view of a structure of a battery according to some embodiments of the disclosure.
FIG. 6 is a cross-sectional view along a C-C section in FIG. 5.
FIG. 7 is an enlarged view of a circled part D in FIG. 6, where a second thermal conductive structure and a collector plate form a composite structure in FIG. 7.
FIG. 8 is a schematic view of a structure of a collector plate in FIG. 5.
FIG. 9 is a schematic view of a structure of a battery according to some embodiments of the disclosure.
FIG. 10 is a cross-sectional view along an E-E section in FIG. 9.
FIG. 11 is an enlarged view of a circled part F in FIG. 10.
FIG. 12 is a schematic view of a structure of a collector plate in FIG. 9.
FIG. 13 is a schematic view of a structure of a battery according to some embodiments of the disclosure.
FIG. 14 is a cross-sectional view along a G-G section in FIG. 13, where a second thermal conductive structure in FIG. 14 is independent of a collector plate and a cover plate.
FIG. 15 is a schematic view of a structure of a battery according to some embodiments of the disclosure, where a tab of an electrode assembly in FIG. 15 is welded to a cover plate to form a first thermal conductive structure.

### Reference number:

100: battery;
1: case assembly;
11: shell; 111: top wall; 112: sidewall;
12: cover plate; 121: boss; 122: sealing cover; 123: first groove; 124: second groove;
2: electrode assembly; 21: tab;
3: collector plate; 301: plate body; 302: folding portion; 303: avoidance notch;
31: collector plate body;
4: first thermal conductive structure;
5: second thermal conductive structure;
6: terminal.

### DESCRIPTION OF THE EMBODIMENTS

In order to make the aforementioned purposes, features, and advantages of the embodiments of the disclosure comprehensible, the technical solutions in the embodiments of the disclosure are described clearly and completely in conjunction with the accompanying drawings of the embodiments of the disclosure. Obviously, the described embodiments are only a part of the embodiments of the disclosure, not all of the embodiments. Based on the embodiments in the disclosure, all other embodiments obtained by those skilled in the art without creation are within the protection scope of the disclosure.

With the development of social economy, batteries are used as energy storage and supply devices in many electrical devices. The electrical devices may be vehicles, mobile phones, portable devices, laptops, ships, spacecraft, electric toys and electric tools, etc. Vehicles may be gasoline vehicles, gas vehicles, or new energy vehicles. New energy vehicles may be pure electric vehicles, hybrid vehicles, or extended-range vehicles, etc. Spacecraft may include airplanes, rockets, space shuttles, and spaceships, etc. Electric toys may include stationary or mobile electric toys, for example, game consoles, electric car toys, electric ship toys, and electric airplane toys. Electric tools may include metal cutting electric tools, grinding electric tools, assembly electric tools and railway electric tools, for example, electric drills, electric grinders, electric wrenches, electric screwdrivers, electric hammers, impact drills, concrete vibrators, and electric planers. The embodiments of the disclosure do not impose special restrictions on the aforementioned electrical devices.

An electrical device may include a device body and a battery. The device body may include a battery compartment. The battery is disposed in a battery compartment and electrically connected to the device body. For example, a power supply interface may be provided in the battery compartment, and the battery may be connected to the power supply interface.

In this embodiment of the disclosure, the battery may be a secondary battery. The secondary battery refers to a single battery unit that may be reactivated through charging after discharge, allowing continued use. The battery may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, etc. This embodiment of the disclosure does not limit the type of battery.

Currently, for some battery models, a collector plate is welded to a cover plate only in a single local region (such as the central region) to electrify the cover plate. Such a method results in only one thermal dissipation path formed by a welding region between the collector plate and the cover plate. At an end of an electrode assembly, heat may only be transferred to the cover plate through the welding region of the collector plate and the cover plate, and then dissipated to the outside to achieve thermal dissipation, which results in a longer thermal dissipation path and lower thermal dissipation efficiency, and makes it difficult to meet the requirements of system-level thermal management.

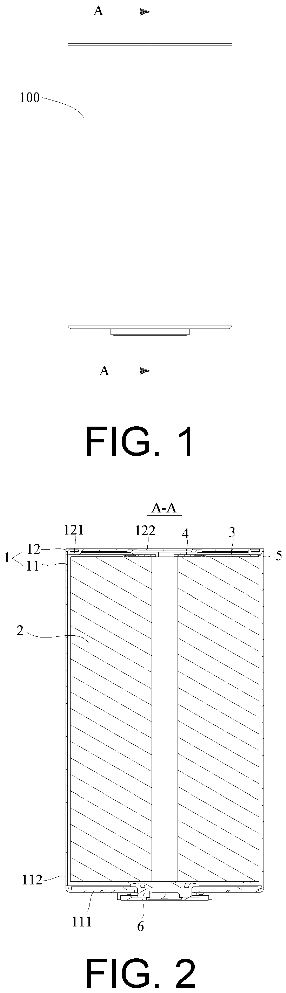

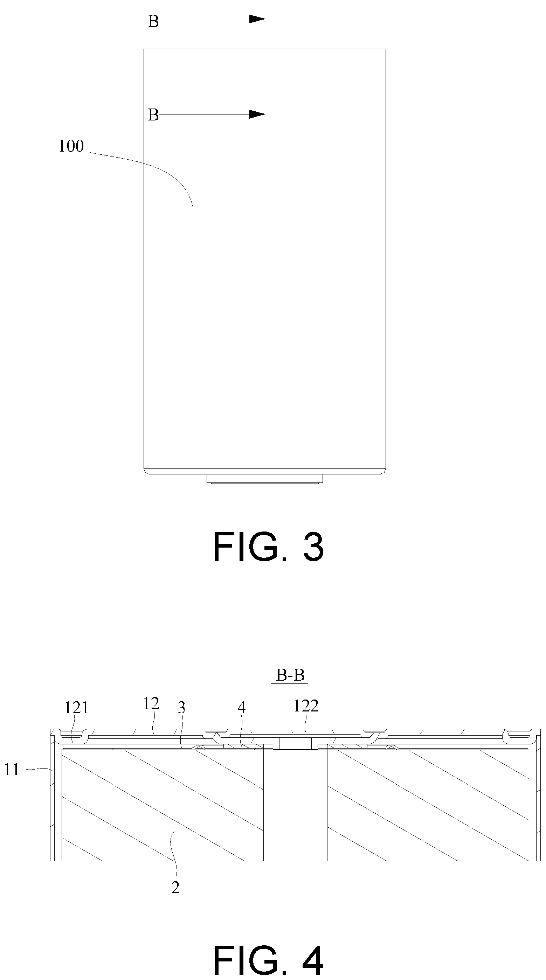

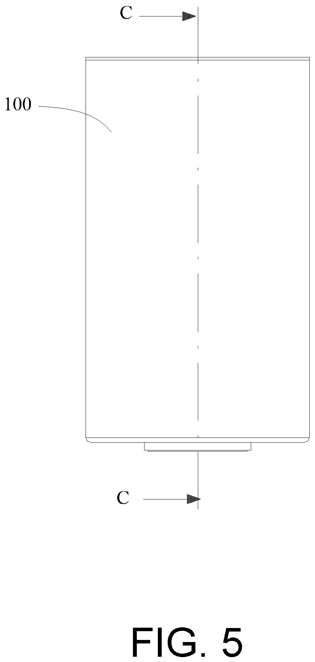

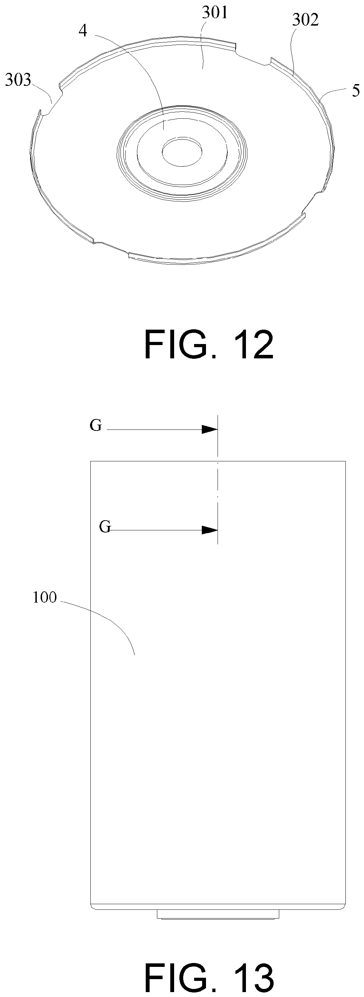

In view of this, a battery 100 is provided in this embodiment. Referring to FIG. 1 to FIG. 14, the battery 100 includes a case assembly 1 and an electrode assembly 2. The case assembly 1 includes a shell 11 and a cover plate 12. The shell 11 may be in a cylindrical shape. An opening is disposed at an end of the shell 11 in an axial direction. The cover plate 12 seals the opening. The cover plate 12 may be a negative electrode cover plate 12.

The electrode assembly 2 may include a positive electrode sheet, a negative electrode sheet, and a separator. The positive electrode sheet, the separator, and the negative electrode sheet are stacked in sequence and then wound to form the electrode assembly 2, that is, the electrode assembly 2 is a wound cell. The electrode assembly 2 is disposed within an inner cavity of the shell 11. A tab 21 is disposed at an end of the electrode assembly 2 facing the cover plate 12.

The tab 21 is electrically connected to the cover plate 12. The tab 21 may be directly connected to the cover plate 12 or may also be electrically connected to the cover plate 12 by an intermediate element such as a collector plate 3.

The tab 21 and the cover plate 12 include a first thermal conductive structure 4 and a second thermal conductive structure 5. The first thermal conductive structure 4 and the second thermal conductive structure 5 are arranged at intervals along the cover plate 12 in a radial direction. The first thermal conductive structure 4 and the second thermal conductive structure 5 may transfer the heat generated on the electrode assembly 2 to the cover plate 12. One of the first thermal conductive structure 4 and the second thermal conductive structure 5 may be a structure disposed for realizing electrical connection between the tab 21 and the cover plate 12, such as a welding region, while the other one of the first thermal conductive structure 4 and the second thermal conductive structure 5 may be a separately disposed thermal conductive structure. In other words, there are at least two thermal conductive regions between the tab 21 and the cover plate 12. As such, the thermal conductive path between the electrode assembly 2 and the cover plate 12 may be increased, thereby improving the thermal dissipation efficiency of the battery 100.

According to the battery 100 of the disclosure, the first thermal conductive structure 4 and the second thermal conductive structure 5 are disposed between the cover plate 12 and the electrode assembly 2, so that the heat generated by the electrode assembly 2 may be transferred to the cover plate 12 through the first thermal conductive structure 4 and the second thermal conductive structure 5 respectively. As such, the thermal conductive path between the electrode assembly 2 and the cover plate 12 is increased, optimizing the temperature field distribution on the cover plate 12 side, and helping to improve the thermal dissipation efficiency of the battery 100. Therefore, the thermal dissipation method of the battery 100 is more suitable for system-level thermal management requirements, thereby expanding an application range of the battery 100. Moreover, the overall implementation method is relatively simple and easy to implement.

In some embodiments, referring to FIG. 2, FIG. 4, FIG. 7, FIG. 11, and FIG. 14, a boss 121 is disposed on a side of the cover plate 12 facing the electrode assembly 2, that is, the boss 121 protrudes from an inner surface of the cover plate 12. For example, the boss 121 may be a circular boss. A diameter of the boss 121 is matching a diameter of the shell 11. Alternatively, the boss 121 is annular and disposed along a peripheral edge of the cover plate 12; or, the boss 121 may be formed by the inner surface and outer surface of the cover plate 12 bending together towards an interior of the battery 100, in which case a part of the outer surface of the cover plate 12 corresponding to the boss 121 forms a groove-like structure. Alternatively, the boss 121 may also be formed by only the inner surface of the cover plate 12 protruding towards the interior of the battery 100, in which case the part of the outer surface of the cover plate 12 corresponding to the boss 121 may form a flat surface, or may have a concave-convex structure as needed. The boss 121 may be formed as a complete circular ring, or may include multiple boss segments distributed at intervals in the circumferential direction. The boss 121 having an outer diameter matching the inner diameter of the shell 11.

By embedding the boss 121 in the opening, the fixation of the cover plate 12 and the shell 11 may be achieved. In some possible embodiments, the boss 121 and the shell 11 may be in an interference fit to improve the connection stability between the cover plate 12 and the shell 11. Alternatively, other structural elements may be inserted between the boss 121 and the shell 11 to achieve a tight connection between the boss 121 and the shell 11, and improve the sealing performance. Of course, to further improve the sealing performance at the opening and the stability of the connection between the cover plate 12 and the shell 11, the cover plate 12 and the shell 11 may also be welded, such as by laser welding.

A flange is disposed on the radial outer side of the boss 121, and abuts against the end of the shell 11 to prevent the cover plate 12 from sinking entirely into the inner cavity of the shell 11. Additionally, in a case where the cover plate 12 is welded to the shell 11, the flange may also provide a welding location.

The battery 100 may further include a collector plate 3. Referring to FIG. 2, FIG. 4, FIG. 7, FIG. 11, and FIG. 14, the collector plate 3 is disposed at an end of the electrode assembly 2. The collector plate 3 is welded and connected to the tab 2. The collector plate 3 is welded and connected to the cover plate 12, where a welded joint between the collector plate 3 and the cover plate 12 constitutes the first thermal conductive structure 4. In this way, the electrode assembly 2 may conduct current to the cover plate 12 through the collector plate 3, and the welding region formed between the collector plate 3 and the cover plate 12 for achieving conduction may be directly utilized as a thermal conductive region. On this basis, only an additional second thermal conductive structure 5 needs to be disposed to achieve multi-path thermal dissipation between the collector plate 3 and the cover plate 12. This implementation method is relatively simple and easy to implement. Moreover, the second thermal conductive structure 5 helps to optimize the temperature field distribution.

Since the positive electrode side of the electrode assembly 2 is typically connected to a terminal 6 and the positive electrode collector plate, in this embodiment, the collector plate 3 connected to the cover plate 12 is the negative electrode collector plate 3 of the battery 100, and correspondingly, the cover plate 12 is the negative electrode cover plate 12.

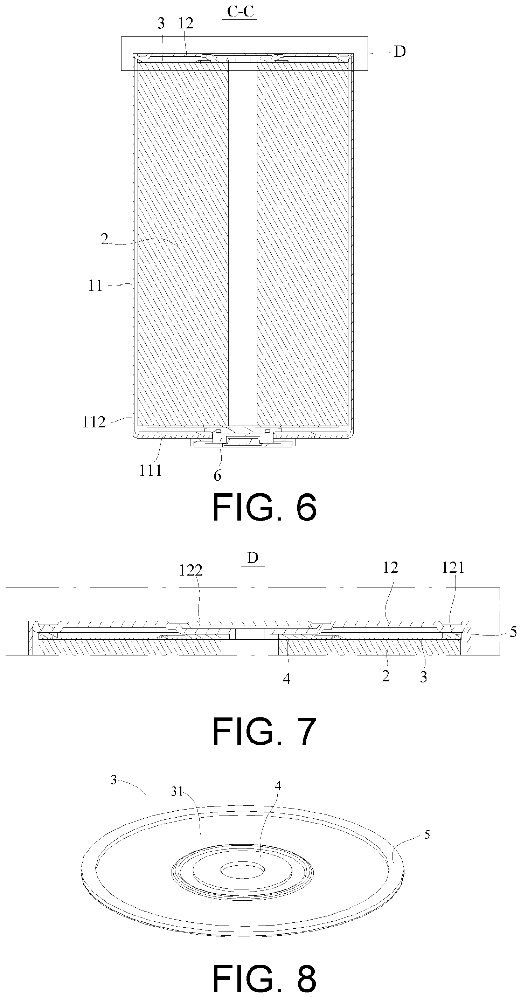

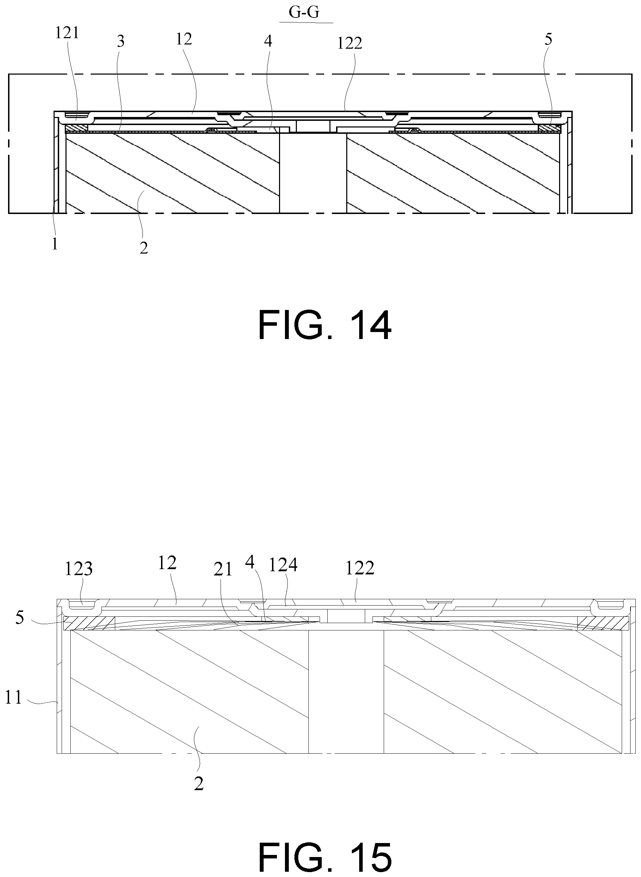

In some embodiments, referring to FIG. 7 and FIG. 14, the second thermal conductive structure 5 is in thermal contact with both the collector plate 3 and the cover plate 12. In this case, the second thermal conductive structure 5 may be a thermal conductive element independent of the collector plate 3 and the cover plate 12, where the thermal conductive element is only in contact with the collector plate 3 and the cover plate 12 but not connected to the same. Moreover, a material of the thermal conductive element may be the same as or different from a material of either the collector plate 3 or the cover plate 12. Alternatively, the second thermal conductive structure 5 may also be constructed to connect to at least one of the collector plate 3 and the cover plate 12. As such, the arrangement method of the second thermal conductive structure 5 is diverse and easy to implement.

In some embodiments, the second thermal conductive structure 5 may be fixedly connected to at least one of the collector plate 3 and the cover plate 12, that is, the second thermal conductive structure 5 may be fixedly connected only to the collector plate 3, or may be fixedly connected only to the cover plate 12, or may be fixedly connected to both the collector plate 3 and the cover plate 12. The fixed connection may be welding or other connection methods. In this way, the connection tightness between the second thermal conductive structure 5 and the collector plate 3 or the cover plate 12 may be enhanced to improve the thermal conductive efficiency between the collector plate 3 and the cover plate 12. Moreover, assembly is easy to reduce assembly procedures.

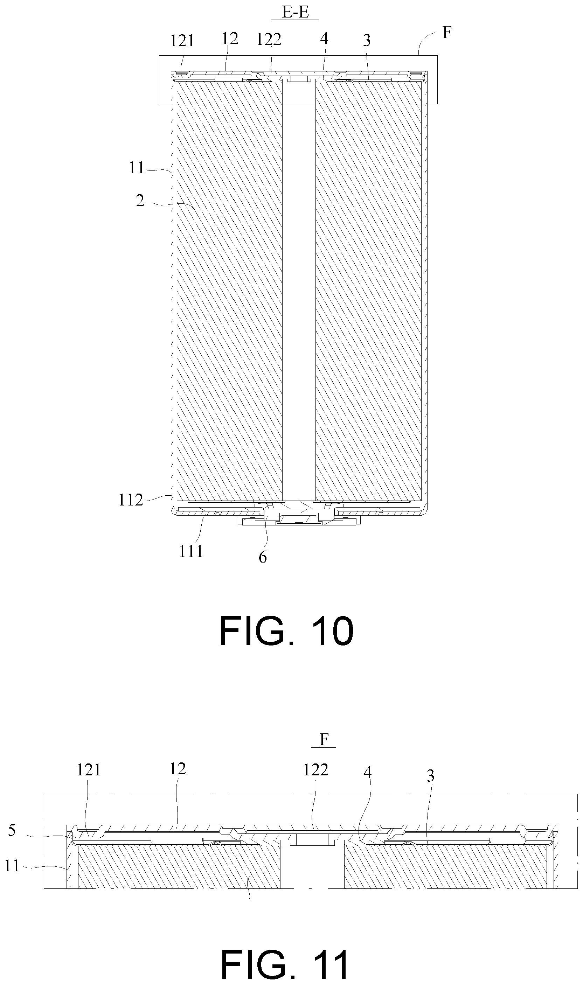

In some embodiments, as shown in FIG.2 and FIG.11, the second thermal conductive structure 5 may be integrally formed with the collector plate 3, that is, the second thermal conductive structure 5 may be a part of the collector plate 3. In this way, the second thermal conductive structure 5 may eliminate the need to manufacture additional components, which is conducive to simplifying the overall structure and assembly method. Furthermore, only adjustments to the structure of the collector plate 3 are required without the need to modify the structures of the cover plate 12 and the shell 11. The collector plate 3 may be simple to form, enabling an increase in thermal conductive paths while reducing manufacturing costs. Additionally, when the second thermal conductive structure 5 is a metal structure, the thermal conductive effect may be better.

In some embodiments, the second thermal conductive structure 5 may be at least one of a thermal conductive adhesive, a thermal conductive pad, and a metal element. As such, the second thermal conductive structure 5 has a good thermal conductive capability. Moreover, the construction of the second thermal conductive structure 5 is relatively simple and cost-effective.

In some embodiments, a thermal conductivity t of the second thermal conductive structure 5 may have a value range of: t > 20W/mK. As such, it may be ensured that the second thermal conductive structure 5 has a relatively good thermal conductive capability, to improve thermal dissipation efficiency.

In some embodiments, referring to FIG. 2, FIG. 4, FIG. 7, FIG. 11, and FIG. 14, the first thermal conductive structure 4 is located in the central region of the collector plate 3. The central region includes a radial center point location of the collector plate 3 and a region at a certain distance from a center point location in the radial direction, and this distance may be reasonably set according to actual needs. In this way, the central regions of the collector plate 3 and the cover plate 12 are welded, so that one of the thermal conductive regions is located in the central region of the collector plate 3, which is conducive to the uniform transfer of heat around this thermal conductive region to this thermal conductive region, and then transferred to the cover plate 12 through this thermal conductive region. Moreover, the interference of this thermal conductive region with an explosion-proof valve on the cover plate 12 may be avoided. For example, the explosion-proof valve is constructed to have a thickness less than a thickness of other parts of the cover plate 12.

In some embodiments, referring to FIG. 2, FIG. 4, FIG. 7, FIG. 11, and FIG. 14, the second thermal conductive structure 5 may be located on a radial inner side of the boss 121, and spaced apart from the first thermal conductive structure 4, that is, the second thermal conductive structure 5 may be located between the boss 121 and the first thermal conductive structure 4. A radial distance between the second thermal conductive structure 5 and the first thermal conductive structure 4 may be greater than 5 mm. As such, compared to a scheme where only the thermal conductive region formed by the first thermal conductive structure 4 is set and the heat at an edge of the electrode assembly 2 needs to be transferred to the middle, since the second thermal conductive structure 5 is located on an outer side of the first thermal conductive structure 4, the heat at the edge part of the electrode assembly 2 may reach the second thermal conductive structure 5 more quickly and be transferred to the cover plate 12 through the second thermal conductive structure 5, shortening a length of the heat transfer path, which may greatly improve the thermal dissipation efficiency. Moreover, the second thermal conductive structure 5 is located on the radial inner side of the boss 121, which makes the second thermal conductive structure 5 not occupy space in the height direction and may also increase the thermal dissipation area.

In some embodiments, referring to FIG. 7 and FIG. 14, the second thermal conductive structure 5 is arranged in a stacked manner between the boss 121 and the electrode assembly 2, that is, the second thermal conductive structure 5 is located on a side of the cover plate 12 along the battery 100 in the axial direction of. At this time, the boss 121 may press on the second thermal conductive structure 5. Since having a certain thickness in the axial direction, the boss 121 may fill a gap between the cover plate 12 and the collector plate 3, which is conducive to reducing a thickness of the second thermal conductive structure 5, saving material, and reducing costs. Additionally, when the second thermal conductive structure 5 is arranged in a stacked manner with the collector plate 3, the boss 121 may also be used to apply a certain pressure to the collector plate 3 and the electrode assembly 2, making locations thereof more stable within the battery 100, thereby improving the overall reliability of the battery 100.

In some embodiments, at least a portion of the second thermal conductive structure 5 in the radial direction may be arranged in a stacked manner with the collector plate 3. For example, the second thermal conductive structure 5 may be entirely located above the collector plate 3, that is, a projection of the second thermal conductive structure 5 on a reference plane may be within a projection of the collector plate 3 on the reference plane, where the reference plane is perpendicular to an axis of the collector plate 3. Alternatively, a part of the second thermal conductive structure 5 in the radial direction may overlap an edge of the collector plate 3. In this case, an inner part of the second thermal conductive structure 5 in the radial direction may be recessed in the axial direction to form a countersink, with the edge of the collector plate 3 located within the countersink. As such, a space occupied in a height direction may be reduced. Additionally, a part of the second thermal conductive structure 5 abuts against the edge of the electrode assembly 2, allowing the electrode assembly 2 to directly transfer heat to the second thermal conductive structure 5 through the tab 21, which further shortens the length of the heat transfer path and improves thermal dissipation efficiency.

When the second thermal conductive structure 5 in this embodiment is a thermal conductive pad with certain elasticity, the thermal conductive pad may be compressed to provide a rebound force to increase an effective contact area thereof with the collector plate 3 and the cover plate 12, thereby reducing surface thermal resistance.

In addition, the collector plate 3 may also be located on a radial inner side of the second thermal conductive structure 5, and an inner wall of the second thermal conductive structure 5 abuts against a peripheral wall of the collector plate 3. In this case, the second thermal conductive structure 5 is located between the tab 21 of the electrode assembly 2 and the cover plate 12. Compared to the arrangement where the second thermal conductive structure 5 is located between the collector plate 3 and the cover plate 12, this configuration allows the electrode assembly 2 to directly transfer heat to the second thermal conductive structure 5 through the tab 21, further shortening the length of the heat transfer path and improving thermal dissipation efficiency. Moreover, since the second thermal conductive structure 5 and the collector plate 3 abut radially, heat may also be transferred between the second thermal conductive structure 5 and the collector plate 3, which helps to improve thermal dissipation efficiency.

In some embodiments, the collector plate 3 may include a plate body 301 and a folding portion 302. An outer diameter of the plate body 301 is matching the inner diameter of the shell 11. For example, the outer diameter of the plate body 301 may be equal to or slightly smaller than the inner diameter of the shell 11 to facilitate the assembly of the collector plate 3. An end of the folding portion 302 is connected to an edge of the plate body 301, and at least partial structure of the folding portion 302 extends in a direction parallel to the plate body 301. The folding portion 302 composes the second thermal conductive structure 5. In other words, the folding portion 302 may be formed by bending the edge part of the collector plate 3. After bending, a thickness of a corresponding part of the collector plate 3 is increased, which facilitates thermal dissipation through contact with the cover plate 12. Moreover, compared with separately disposed a thermal conductive component, the bending process is simpler, making the collector plate 3 easier to assemble.

For example, the folding portion 302 may include a first section and a second section. The first section extends along the battery 100 in the axial direction, or may also extend in an inclined manner. Alternatively, the first section may be arc-shaped or any other arbitrary shape, while the second section extends along the battery 100 in the radial direction to facilitate contact with the cover plate 12. Two ends of the first section are connected to the edge of the plate body 301 and the second section respectively. At this time, the folding portion 302 is generally L-shaped. By disposing the first section, the overall height of the folding portion 302 may be conveniently adjusted to facilitate contact with the cover plate 12. By adjusting a width of the second section in the radial direction, the contact area between the folding portion 302 and the cover plate 12 may be adjusted to maximize the thermal conductive efficiency.

In some embodiments, an installation gap may be defined between the folding portion 302 and the plate body 301. The battery 100 may further include an elastic element (not shown in the figures) which is disposed in an installation gap. Two ends of the elastic element are connected, for example, abutted against the folding portion 302 and the plate body 301 respectively. By disposing the elastic element, the folding portion 302 is made to have a certain elasticity. In this way, when the collector plate 3 and the cover plate 12 are assembled, the cover plate 12 may apply a certain pressure to the folding portion 302, which is conducive to forming a larger contact area between the folding portion 302 and the plate body 301, improving the thermal dissipation effect, and also helping to enhance the installation stability of the collector plate 3 and the electrode assembly 2.

Optionally, the elastic element may be a spring or an elastic pad. As such, the elastic element has a simple structure for easy assembling and a relatively low cost.

Considering that the collector plate 3 is a circular structure, when the edge thereof is folded to form the folding portion 302, wrinkles may easily occur, which results in an uneven surface of the collector plate 3 and affects the welding effectiveness with the tab 21 and the space the collector plate 3 occupies. To avoid wrinkles during the folding process, in this embodiment, multiple avoidance notches 303 may be disposed on the edge of the collector plate 3, with the avoidance notches 303 disposed at intervals along the collector plate 3 in the circumferential direction. The avoidance notches 303 may be disposed on the edge of the collector plate 3, for example, by forming the avoidance notches 303 through a stamping process, and then performing the folding process to form the folding portion 302. Disposing the avoidance notches 303 may prevent different parts of the edge from compressing each other, thereby preventing wrinkles and reducing the process difficulty.

To achieve electrical conduction between the collector plate 3 and the cover plate 12, in addition to the aforementioned scheme of welding the central region of the collector plate 3 and the cover plate 12 to make the first thermal conductive structure 4 located in the central region of the collector plate 3, in some other embodiments, the edge of the collector plate 3 may be welded to the boss 121 to form the first thermal conductive structure 4, so that the first thermal conductive structure 4 is located in the edge area of the collector plate 3 and the cover plate 12, which may also achieve conduction between the collector plate 3 and the cover plate 12 and make the cover plate 12 serve as the negative electrode of the battery 100. Moreover, since the boss 121 is in contact with the sidewall of the shell 11, the boss 121 may shorten the current path and thermal dissipation path. Furthermore, compared to the scheme of welding the central region of the collector plate 3 and the cover plate 12, the connection area between the collector plate 3 and the cover plate 12 may be increased, resulting in lower internal resistance when current flows through the first thermal conductive structure 4, and thus less heat generation.

In some embodiments, the side of the boss 121 facing away from the electrode assembly 2 includes a first groove 123. A bottom wall of the first groove 123 is welded to the collector plate 3 to form a first thermal conductive structure 4. By disposing the first groove 123, when a method of laser penetration welding is used, the laser welding may be applied to the bottom wall of the first groove 123, allowing heat to quickly reach the collector plate 3 through the bottom wall, so as to weld the edge of the boss 121 to the collector plate 3. The formation of protrusions on the upper surface of the cover plate 12 at the welding mark part may also be avoided, which would cause unevenness on the surface of the cover plate 12 and affect the contact between the cover plate 12 and the cooling plate of the thermal management system.

In some embodiments, the second thermal conductive structure 5 may be disposed on the radial inner side of the boss 121, and a radial distance between the second thermal conductive structure 5 and the boss 121 may be greater than 5mm. In this case, the second thermal conductive structure 5 may be circular, annular, or any other shape. In this way, a thermal conductive region is also disposed on the radial inner side of the boss 121, making it possible for the bottom of the battery 100 to dissipate heat, and the side may also dissipate heat, thus improving the thermal dissipation efficiency.

In some embodiments, the second thermal conductive structure 5 may be disposed in the central region of the collector plate 3, and the second thermal conductive structure 5 may be welded to the cover plate 12. In this case, there are two welded joints between the collector plate 3 and the cover plate 12, and conduction is achieved through these two welded joints, which is equivalent to two parallel branches. Since the parallel resistance is less than the series resistance, under the condition of the same total current, the total heat generation is reduced, which may decrease the thermal dissipation pressure of the battery 100.

In some embodiments, in conjunction with FIG. 8, the collector plate 3 includes a collector plate body 31 and a first thickening portion. The first thickening portion composes the first thermal conductive structure 4. In other words, the thickness of the first thermal conductive structure 4 may be greater than the thickness of other parts of the collector plate 3. When the collector plate 3 and the cover plate 12 are connected through laser penetration welding, thickening the first thermal conductive structure 4 may avoid the collector plate 3 being welded through, thereby avoiding damage to the electrode assembly 2 and ensuring the welding quality.

It may be understood that when a material of the collector plate body 31 is the same as that of the first thickening portion, the collector plate body 31 and the first thickening portion may be an integrally formed structure; when the material of the collector plate body 31 is different from that of the second thickening portion, the collector plate body 31 and the first thickening portion may be a composite integral structure.

In some embodiments, the material of the first thickening portion may be the same as a material of the cover plate 12. For example, the first thickening portion may be a general cold-rolled carbon steel sheet and strip (SPCC). As such, the cover plate 12 and the first thickening portion have good conductivity and corrosion resistance. Of course, the disclosure is not limited to thereto, and the materials of the first thickening portion and the cover plate 12 may also be other metallic materials. By making the material of the first thickening portion the same as the material of the cover plate 12, the first thickening portion and the cover plate 12 have the same melting point, which may form a more uniform weld mark during the cooling process of the weld pool after welding, improving the welding quality. Moreover, the material requirements for the collector plate 3 body may be reduced, so that the collector plate 3 body adopts a different metallic material from the cover plate 12 to fully improve a current-carrying capacity thereof and reduce heat generation.

It may be understood that the difference between the material of the collector plate body 31 and that of the first thickening portion. Taking the collector plate body 31 made of copper metal material as an example, since the first thickening portion is made of steel, the first thickening portion may be composited onto the collector plate body 31 through a composite process to form a composite structure of the collector plate 3, that is, the collector plate 3 is made of SPCC-Cu composite material, with the first thickening portion serving as one of the welding pads of the composite structure of the collector plate 3.

In some embodiments, a distance from a surface of the first thickening portion facing the electrode assembly 2 to the outer surface of the cover plate 12 may be the same as a distance from the surface of the second thermal conductive structure 5 facing the electrode assembly 2 to the outer surface of the cover plate 12. In other words, the total thickness of the cover plate 12 and the collector plate 3 at the part corresponding to the first thickening portion may be the same as the total thickness at the part corresponding to the second thermal conductive structure 5. In this way, the internal space of the battery 100 may be fully utilized to dispose the second thermal conductive structure 5, avoiding waste of the internal space of the battery 100 and improving space utilization efficiency.

In some embodiments, in conjunction with FIG. 8, the collector plate 3 may further include a second thickening portion. The second thickening portion composes the second thermal conductive structure 5. The second thickening portion may be welded and connected to the cover plate 12. In other words, the thickness of the second thermal conductive structure 5 may be greater than a thickness of the remaining parts of the collector plate 3 except for the first thermal conductive structure 4 and the second thermal conductive structure 5. In this way, the connection between the second thermal conductive structure 5 and the cover plate 12 may be facilitated through laser penetration welding to prevent the collector plate 3 from being welded through, thereby avoiding damage to the electrode assembly 2 and improving the assembly yield rate. Additionally, both the first thermal conductive structure 4 and the second thermal conductive structure 5 may be connected to the cover plate 12 through welding, which is equivalent to two parallel paths. Since the total resistance of parallel connections is less than that of series connections, under the same total current, the total heat generation at the two welding parts may be reduced, which may alleviate the thermal dissipation pressure.

It may be understood that, when the material of the collector plate body 31 is the same as that of the second thickening portion, the collector plate body 31 and the second thickening portion may be an integrally formed structure; when the material of the collector plate body 31 is different from that of the second thickening portion, the collector plate body 31 and the second thickening portion may be a composite integral structure.

In some embodiments, the material of the second thickening portion may be the same as the material of the cover plate 12. For example, the cover plate 12 and the second thickening portion may be made of cold-rolled carbon steel sheets and strips (SPCC), which provides good conductivity and corrosion resistance for the cover plate 12 and the second thickening portion. However, the disclosure is not limited to thereto. The materials of the second thickening portion and the cover plate 12 may also be other metallic materials. By making the material of the second thickening portion the same as the material of the cover plate 12, the second thickening portion and cover plate 12 have the same melting point, which may form a more uniform weld mark during the cooling process of the weld pool after welding, improving welding quality. Moreover, the material requirements for the collector plate 3 body may be reduced, so that the collector plate 3 body adopts a different metallic material from the cover plate 12 to fully improve current-carrying capacity thereof and reduce heat generation.

It may be understood that the difference between the material of the collector plate body 31 and that of the second thickening portion. Taking the collector plate body 31 made of copper metal material as an example, since the second thickening portion is made of steel, the second thickening portion may be composited onto the collector plate body 31 through a composite process to form a composite structure of the collector plate 3, that is, the collector plate 3 is made of SPCC-Cu composite material, with the second thickening portion serving as one of the welding pads of the composite structure of the collector plate 3.

Understandably, an area of the collector plate 3 welded with the tab 21 may not be provided with an SPCC layer, to facilitate welding of the collector plate 3 with the copper tab 21.

In some embodiments, when both the first thermal conductive structure 4 and the second thermal conductive structure 5 are used to implement welding of the cover plate 12 and the collector plate 3, a welding area S1 corresponding to the second thermal conductive structure 5 located in the central region of the collector plate 3 and a welding area S2 corresponding to the first thermal conductive structure 4 located at the edge of the collector plate 3 satisfy: S1/S2≤1/8.8.

The case where the collector plate 3 is welded to the cover plate 12 at both the central part and the edge is equivalent to having two electrical connection points between the electrode assembly 2 and the cover plate 12. A first current path is: tab 21 - central part of collector plate 3 - central part of cover plate 12 - edge of cover plate 12. A second current path is: tab 21 - edge of collector plate 3 - edge of cover plate 12. The two current paths are connected in parallel and finally converge at the edge of the cover plate 12.

For the first current path, an equivalent resistance thereof is approximately equal to a resistance of the cover plate 12. For the second current path, an equivalent resistance thereof is approximately equal to an internal resistance of the collector plate 3.

The resistance of the cover plate 12 / the resistance of the collector plate 3 = ρcover * Tplate / ρplate * Tcover, where ρcover and ρplate are the resistivity of the cover plate 12 and the collector plate 3 respectively, and Tplate and Tcover are the thicknesses of the bodies of the collector plate 3 and the cover plate 12 respectively.

The body of the cover plate 12 may be made of steel. The body of the collector plate 3 body may be made of copper. By incorporating respective resistivity and thickness of the bodies of the cover plate 12 and the collector plate 3, ρcover*Tplate/ρplate*Tcover≈8.8 may be obtained.

Then a current ratio between the cover plate 12 and the collector plate 3 may be: I1/I2=Rplate/Rcover=1/8.8.

The welding area S1 is disposed between the middle part of the cover plate 12 and the collector plate 3. The welding area S2 is disposed between the edge of the cover plate 12 and the collector plate 3. If the current-carrying capacity of the two welded joints is to be made the same, which is I1/S1 = I2/S2 , then S1/S2=I1/I2= 1/8.8;

Considering the requirements for thermal dissipation efficiency of the battery 100, at the edge of the cover plate 12, due to the larger current, the smaller S2 is, the faster a temperature thereof rises. It is necessary to increase the area of S2 to accelerate thermal dissipation; therefore, S2 should be increased, so under the premise of ensuring overcurrent, S1/S2 may be less than 1/8.8.

When S1/S2**>**1/8.8, the edge overcurrent capability may be weaker than the central part, and the thermal dissipation capacity may also be insufficient.

In summary, when S1/S2≤1/8.8 , the current flow capability between the collector plate 3 and the cover plate 12 may be ensured while fully guaranteeing the thermal dissipation capability of the battery 100, thereby improving the performance of the battery 100.

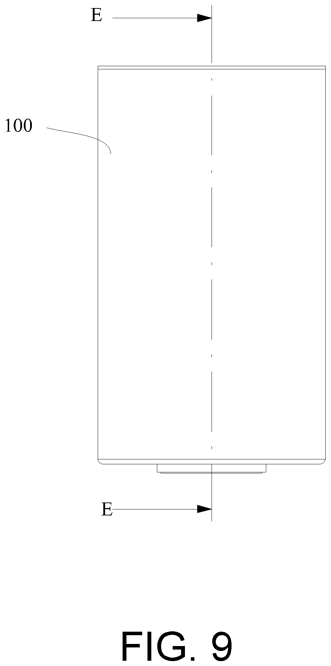

Referring to FIG. 9 to FIG. 12, in addition to the scheme of arranging the second thermal conductive structure 5 and the cover plate 12 in the axial direction in the aforementioned embodiment, the embodiment of the disclosure also provides another arrangement form of the second thermal conductive structure 5. Specifically, in the embodiment, the first thermal conductive structure 4 may be set in the central region of the collector plate 3, and the second thermal conductive structure 5 may be disposed at the edge of the collector plate 3. The second thermal conductive structure 5 may extend towards one side of the cover plate 12 in the axial direction, and the second thermal conductive structure 5 may be embedded between the boss 121 and the shell 11. In this way, the boss 121 and the shell 11 may jointly clamp the second thermal conductive structure 5, and heat may be transferred from the second thermal conductive structure 5 to the cover plate 12 and the shell 11 respectively, further increasing the thermal dissipation path and improving the thermal dissipation efficiency. Moreover, an additional height space is not required, assembly is simple, and the tightness of the fit between the boss 121 and the shell 11 may also be increased.

Optionally, the second thermal conductive structure 5 may be a folding portion 302 formed by bending the edge part of the collector plate 3. In this embodiment, the folding portion 302 extends along the battery 100 in the axial direction. The second thermal conductive structure 5 may be flush with the end of the shell 11, or may be lower than the end of the shell 11. As such, the processing method of the second thermal conductive structure 5 is relatively simple and easy to assemble, resulting in lower implementation costs.

In the aforementioned embodiment, to facilitate welding of the cover plate 12 and the collector plate 3 using laser penetration welding, a second groove 124 may be disposed in the part (for example, in the central region of the cover plate 12) of the cover plate 12 opposite to the first thermal conductive structure 4. By disposing the second groove 124, the thickness of the cover plate 12 at this welding position is reduced. During welding, the welding equipment may be inserted into the second groove 124, acting on the bottom wall of the second groove 124, to facilitate the rapid transfer of welding heat from the second groove 124 side of the cover plate 12 to the first thermal conductive structure 4, and then to the collector plate 3, thus smoothly completing the welding and ensuring welding quality. After welding is completed, to ensure the flatness of the cover plate 12 surface, a case assembly 1 may further include a sealing cover 122. After the collector plate 3 and the cover plate 12 are welded, the sealing cover 122 may cover the second groove 124, and the sealing cover 122 may be flush with or smoothly transition to the end face of the cover plate 12, so that the cover plate 12 is easily connected to external circuits, while the consistency of appearance of the battery 100 is also ensured. At this time, the heat transferred to the cover plate 12 through the first thermal conductive structure 4 may have three thermal conductive paths, namely the sealing cover 122 as one, the part of the cover plate 12 adjacent to the first thermal conductive structure 4 as one, and the part of the cover plate 12 in contact with the second thermal conductive structure 5 as another. Thereby, the thermal dissipation paths are further increased, and thermal dissipation efficiency is improved.

Referring to FIG. 15, in addition to the aforementioned scheme of realizing electrical connection between the tab 21 and the cover plate 12 through the collector plate 3, the disclosure further provides another method of electrical connection between the tab 21 and the cover plate 12. Specifically, in this embodiment, the tab 21 and the cover plate 12 are electrically connected through the first thermal conductive structure 4. In other words, in this embodiment, no collector plate is disposed. The first thermal conductive structure 4 realizes the electrical connection between the tab 21 and the cover plate 12, and achieves thermal conductive between the tab 21 and the cover plate 12. As such, compared with the scheme of disposing the collector plate 3, this method may reduce the number of parts, lower costs, and save internal space of the battery 100, which is conducive to improving the energy density of the battery 100. Moreover, this method may further shorten the heat transfer path, thereby improving thermal dissipation efficiency.

In some embodiments, referring to FIG. 15, the cover plate 12 and the tab 21 are welded to form the first thermal conductive structure 4, that is, the cover plate 12 and the tab 21 are directly connected, and the second thermal conductive structure 5 may be disposed in the gap between the cover plate 12 and the tab 21. In this way, the heat transfer path may be further shortened, thereby improving the thermal dissipation efficiency, saving the internal space occupied by the collector plate, and contributing to improving the energy density of the battery 100.

In a specific example, the battery 100 may be a cylindrical battery. As such, the construction of the battery 100 may be relatively simple, facilitating manufacturing.

Further, the shell 11 includes a top wall 111 opposite to the cover plate 12 and a sidewall 112 surrounding the top wall 111. The top wall 111 and the sidewall 112 are integrally formed. The battery 100 may further include a terminal 6. The terminal 6 is inserted through the top wall. An end of the electrode assembly 2 facing the terminal 6 includes a positive tab 21. The terminal 6 is electrically connected to the positive tab 21. For example, the positive tab 21 and the terminal 6 are welded through a positive collector plate to achieve electrical connection. The tab 21 at the end of the electrode assembly 2 facing the cover plate 12 is a negative tab 21, and the cover plate 12 is electrically connected to the negative tab 21. In other words, the shell 11 in this embodiment may carry negative charge. As such, the structure of the battery 100 is relatively simple and easy to manufacture.

It should be further noted that the electrical device provided in the embodiments of the disclosure, by disposing the battery 100 in the aforementioned embodiments, due to the higher thermal dissipation efficiency of the battery 100, helps to alleviate the overall thermal dissipation pressure of the electrical device, and is more suitable for system-level thermal management requirements.

It should be pointed out that the "an embodiment", "embodiment", "exemplary embodiment", "some embodiments", and the like mentioned in the specification may include specific features, structures, or characteristics, but not every embodiment necessarily includes such specific features, structures, or characteristics. Moreover, such phrases do not necessarily refer to the same embodiment. Furthermore, when specific features, structures, or characteristics in conjunction with embodiments are described, implementing such features, structures, or characteristics in combination with other embodiments explicitly or implicitly described is within the knowledge of those skilled in the art.

Generally, terms should be understood at least partially based on contextual usage thereof. For example, at least partially according to the context, the term "one or multiple" used in the text may be used to describe any feature, structure, or characteristic in a singular sense, or may be used to describe a combination of features, structures, or characteristics in a plural sense. Similarly, at least partially according to the context, terms such as "a" or "the" may also be understood to convey singular usage or plural usage.

It should be easily understood that "on", "above", and "over" in this disclosure should be interpreted in the broadest way possible, so that "on" not only means "directly on something", but also includes the meaning of "on something" with intermediate features or layers in between, and "above" or "over" not only includes the meaning of "above" or "over something", but may also include the meaning of "above" or "over something" without intermediate features or layers in between (that is, directly on something).

In addition, for convenience, spatial relative terms such as "below", "beneath", "lower", "above", "upper", and the like may be used in the text to describe the relationship of one element or feature to another element or feature as illustrated in the figures. The spatial relative terms are intended to encompass different orientations of the device in use or operation in addition to the orientation depicted in the figures. The device may have other orientations (rotated 90 degrees or at other orientations), and the spatial relative descriptive words used in the text may be interpreted accordingly.

## Claims

1. **A battery** (100), comprising:
a case assembly (1), comprising a shell (11) and a cover plate (12), wherein an opening is disposed at an end of the shell (11) in an axial direction, and the cover plate (12) seals the opening; and
an electrode assembly (2), disposed within an inner cavity of the shell (11), wherein a tab (21) is disposed at an end of the electrode assembly (2) facing the cover plate (12);
wherein the tab (21) is electrically connected to the cover plate (12), a first thermal conductive structure (4) and a second thermal conductive structure (5) are provided between the tab (21) and the cover plate (12), the first thermal conductive structure (4) and the second thermal conductive structure (5) are arranged at intervals along the cover plate (12) in a radial direction, and the first thermal conductive structure (4) and the second thermal conductive structure (5) transfer heat generated on the electrode assembly (2) to the cover plate (12).

2. The battery (100) according to claim 1 or 2, wherein the cover plate (12) comprises a boss (121) protruding towards the electrode assembly (2), the boss (121) having an outer diameter matching the inner diameter of the shell (11).

3. The battery (100) according to any one of claims 1 to 2, wherein the battery (100) further comprises a collector plate (3), the collector plate (3) is welded to the cover plate (12) and the tab (21) respectively, wherein a welded joint between the collector plate (3) and the cover plate (12) constitutes the first thermal conductive structure (4).

4. The battery (100) according to any one of claims 1 to 3, wherein the second thermal conductive structure (5) is in thermal contact with the collector plate (3) and the cover plate (12) respectively.

5. The battery (100) according to any one of claims 1 to 4, wherein a thermal conductivity (t) of the second thermal conductive structure (5) has a value range of: t > 20W/mK.

6. The battery (100) according to any one of claims 1 to 5, wherein the boss (121) is annular and disposed along a peripheral edge of the cover plate (12), and a central region of the collector plate (3) is welded to the cover plate (12) to form the first thermal conductive structure (4).

7. The battery (100) according to any one of claims 1 to 6, wherein the second thermal conductive structure (5) is arranged in a stacked manner between the boss (121) and the electrode assembly (2).

8. The battery (100) according to any one of claims 1 to 7, wherein the collector plate (3) comprises a plate body (301) and a folding portion (302), the plate body (301) is electrically connected to the tab (21), an end of the folding portion (302) is connected to an edge of the plate body (301), and at least a part of a structure of the folding portion (302) extends in a direction parallel to the plate body (301), and
the folding portion (302) composes the second thermal conductive structure (5).

9. The battery (100) according to any one of claims 1 to 8, wherein an installation gap is defined between the folding portion (302) and the plate body (301), the battery (100) further comprises an elastic element, the elastic element is disposed in the installation gap, and two ends of the elastic element abut against the folding portion (302) and the plate body (301) respectively.

10. The battery (100) according to any one of claims 1 to 9, wherein the boss (121) is formed at an edge of the cover plate (12), the boss (121) is an annular boss, and an edge of the collector plate (3) is welded to the boss (121) to form the first thermal conductive structure (4).

11. The battery (100) according to any one of claims 1 to 10, wherein the second thermal conductive structure (5) is disposed in a central region of the collector plate (3), and the second thermal conductive structure (5) is welded to the cover plate (12).

12. The battery (100) according to any one of claims 1 to 11, wherein a welding area corresponding to the second thermal conductive structure (5) is S1, a welding area corresponding to the first thermal conductive structure (4) is S2, and S1 and S2 satisfy: S1/S2≤1/8.8.

13. The battery (100) according to any one of claims 1 to 12, wherein the battery (100) is a cylindrical battery (100).

14. The battery (100) according to any one of claims 1 to 13, wherein the shell (11) comprises a top wall (111) opposite to the cover plate (12) and a sidewall (112) surrounding the top wall, the top wall and the sidewall (112) are integrally formed, the sidewall (112) defines the opening, the battery (100) further comprises a terminal (6), the terminal (6) is inserted through the top wall, an end of the electrode assembly (2) facing the terminal (6) is a positive tab (21), the terminal (6) is electrically connected to the positive tab (21), the tab (21) at the end of the electrode assembly (2) facing the cover plate (12) is a negative tab (21), and the shell (11) is electrically connected to the negative tab (21).

15. An electrical device, comprising:
the battery (100) according to any one of claims 1 to 14.
